# EUROPÄISCHE PATENTSCHRIFT

(11) **EP 0 705 947 B1**
(45) Veröffentlichungstag und Bekanntmachung des Hinweises auf die Patenterteilung: **17.06.1998**
(21) Anmeldenummer: 95810524.9
(22) Anmeldetag: 21.08.1995
(51) Int. Cl.: E03F 3/06, E21B 7/20, F16L 55/165

(54) **Vorrichtung zum Ersetzen von Rohren, insbesondere von Kanalisationsrohren**
Device for the replacement of tubes, in particular sewage tubes
Dispositif pour le remplacement des tuyaux, particulièrement des tuyaux d'égout

(30) Priorität: 16.09.1994 CH 2818/94
(43) Veröffentlichungstag der Anmeldung: 10.04.1996
(73) Patentinhaber: Granella, Bruno, CH-5200 Brugg (CH)
(72) Erfinder: Granella, Bruno, CH-5200 Brugg (CH)
(74) Vertreter: Luchs, Willi

(56) Entgegenhaltungen:
- EP-A- 0 411 278
- EP-A- 0 574 187
- WO-A-93/09305
- DE-U- 9 318 194

## Beschreibung

Die Erfindung betrifft eine Vorrichtung zum Ersetzen von Rohren, insbesondere von Kanalisationsrohren, mit einem vorantreibbaren, in einem Maschinenrohr drehbar gelagerten Fräskopf, welcher ein bestehendes Rohr stirnseitig abfräst und diesem dabei eine im abzubauenden Rohr geführter Zentriereinheit zugeordnet ist.

Bei einer gattungsmässigen Vorrichtung nach der WO-A1 93/09305 wird ein zu ersetzendes Kanalisationsrohr mittels eines Fräskopfes stirnseitig abgebaut. Der Fräskopf wird dabei über eine Führungseinrichtung im abzubauenden Rohr zwangsgeführt und ist von dem hinter ihm nachgeführten neuen Rohr abgestützt. Damit ist gewährleistet, dass der Fräskopf mit seiner Drehachse zur Längsachse des zu ersetzenden Rohres stets achsengleich oder in unverändertem Abstand vorwärts getrieben wird und er zu diesem damit nicht seitwärts wegdriftet. Die Führungseinrichtung kann einen Lagerkörper und mindestens zwei gegenüber diesem radial einstellbarer Stützelemente aufweisen, welche mit einem einstellbaren Druck gegen die Innenwandung des abzubauenden Rohres andrückbar sind und zusammen trommelförmig ausgebildet sind, um das Rohr möglichst vollumfänglich zu stützen. Sie setzen sich aus jeweils einer radial wirkenden Kolben/Zylinder-Einheit sowie aus einer abgerundeten, an dem Kolben gelenkig gelagerten Spannbacke zusammen, welche während dem Abfräsen entlang der Innenwandung des Rohres gleiten. Es besteht dabei eine gewisse Gefahr, dass sich die Führungseinrichtung ungewollt innerhalb des abzubauenden Rohres infolge von Reaktionskräften im Lager etwas verrollt.

Aufgabe der vorliegenden Erfindung besteht demgegenüber darin, eine Vorrichtung nach der eingangs beschriebenen Gattung zu schaffen, die eine Führungseinheit aufweist, welche drehsicher im abzubauenden Rohr geführt ist und diese überdies derart angeordnet ist, dass der Fräskopf in dieser Vorrichtung in idealer Weise drehgelagert ist. Darüberhinaus sollen Leitungen, Kabel oder dergleichen in der Vorrichtung in vereinfachter Anordnung enthalten sein.

Erfindungsgemäss ist die Aufgabe dadurch gelöst, dass sich die Führungseinheit über ein Verbindungselement durch den Fräskopf hindurch erstreckt und mit dem den Fräskopf drehbar lagernden Maschinenrohr verbunden ist, wobei in diesem Verbindungselement (34) eine Durchgangsöffnung (35) vorgesehen ist, durch welche Leitungen (36), Kabel oder dergleichen von der Zentriereinheit (30) durch die Vorrichtung (10) und durch das neue Rohr (12) nach hinten geführt sind.

Mit dieser erfindungsgemässen Ausbildung der Vorrichtung ist deren Führungseinheit in vereinfachter Weise in dem abzubauenden Rohr drehsicher geführt und es wirken von dieser her keine zusätzlichen Kräfte auf den Fräskopf. Zudem können durch die Vorsehung einer Durchgangsöffnung in dem Verbindungselement die Leitungen von der Zentriereinheit nach hinten durch das neue Rohr geführt werden.

Die Erfindung sowie weitere Vorteile derselben sind nachfolgend anhand der Zeichnung näher erläutert. Es zeigt:
- Fig.1: einen Längsschnitt durch eine erfindungsgemässe Vorrichtung,
- Fig.2: einen Querschnitt durch die Führungseinheit der Vorrichtung gemäss der Linie II-II nach Fig.1,
- Fig.3: einen Querschnitt durch die Führungseinheit der Vorrichtung gemäss der Linie III-III nach Fig. 1,
- Fig.4: einen Querschnitt unmittelbar vor dem Fräskopf der Vorrichtung gemäss der Linie IV-IV nach Fig. 1 und
- Fig.5: einen Querschnitt unmittelbar hinter dem Fräskopf gemäss der Linie V-V nach Fig.1 mit einer Variante einer Steuereinrichtung.

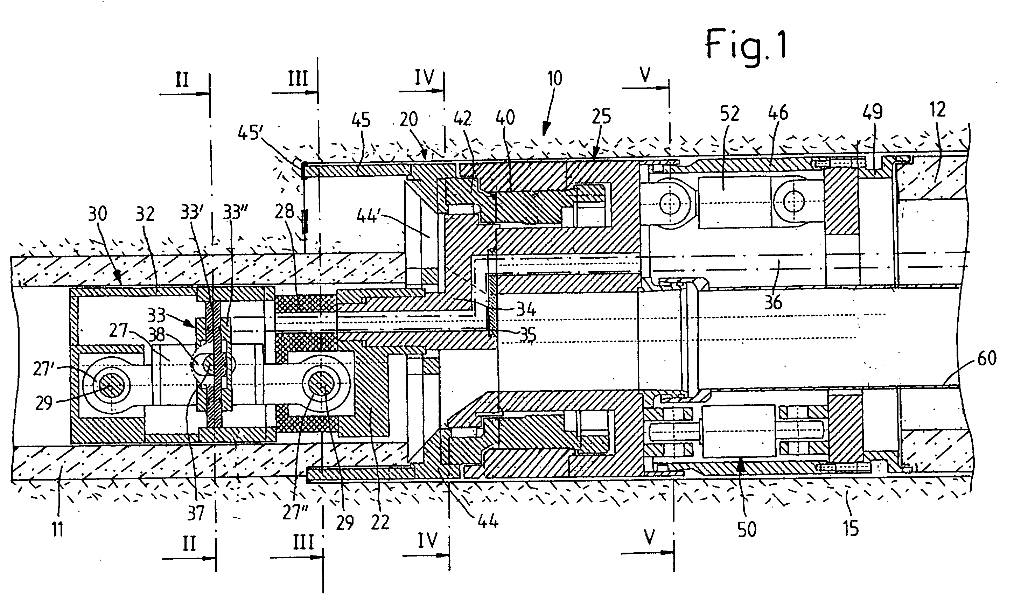

Fig.1 zeigt eine Vorrichtung 10, die insbesondere zum Ersetzen von Kanalisationsrohren 11 dient, bei der das neue Rohr 12 gegenüber dem alten Rohr mit einem gleichen oder aber häufiger mit einem grösseren Durchmesser versehen wird. Diese Vorrichtung 10 besteht dabei im wesentlichen aus einem Maschinenrohr 25, einem an dessen Vorderseite achsgleich drehbar gelagerten Fräskopf 20, einer Zentriereinheit 30, einer das Maschinenrohr 25 führenden Steuereinrichtung 50 sowie einer Förderschnecke 60, mittels der das abgearbeitete Material aus dem Rohr befördert wird. Ferner sind für diese Vorrichtung 10 eine nicht näher gezeigte Versorgungs- und eine Steuereinheit vorgesehen, die sich ausserhalb des Rohres über dem Boden befinden, mittels denen die Vorrichtung gesteuert und angetrieben wird.

Der Aussendurchmesser des Fräskopfes 20 ist vorteilhaft annähernd gleich gross wie derjenige des hinter diesem nachgeführten neuen Rohres 12 gewählt. Auch derjenige des Maschinenrohres 25 ist gleich gross vorgesehen, wodurch dieses in der durch den Fräskopf 20 erzeugten zylindrischen Bohrung gewissermassen geführt ist.

Erfindungsgemäss erstreckt sich die Zentriereinheit 30 durch den Fräskopf 20 hindurch und sie ist mit dem diesen Fräskopf 20 drehbar lagernden Maschinenrohr 25 verbunden. Diese Zentriereinheit 30 weist einen hohlzylindrischen Zentrierkörper 32 und ein diesen zum Fräskopf 20 radial einstellbares Verschiebeorgan 33 auf, wobei der Aussendurchmesser des Zentrierkörpers 32 und der Innendurchmesser des abzubauenden Rohres 11 annähernd gleich sind. Die starre Verbindung der Zentriereinheit 30 mit dem Maschinenrohr 25 ist über ein Verbindungselement 34 bewerkstelligt, welches exzentrisch an der Zentriereinheit 30 befestigt ist, sich koaxial durch den Fräskopf erstreckt, unmittelbar nachfolgend radial nach aussen abgewinkelt und danach im Innern des Maschinenrohrs 25 fixiert ist. Im Grunde genommen könnte die Zentriereinheit 30 auch koaxial am Verbindungselement 34 befestigt sein. Mit der dargestellten exzentrischen Befestigung ist jedoch ein sohlengleiches Verlegen des neuen Rohres 12 zum alten möglich, d.h., das untere Niveau des Rohrinnern ist vom alten zum neuen grösseren identisch, was in der Praxis sehr vorteilhaft ist. Dieses Verbindungselement 34 ist vorzugsweise fest mit dem Maschinenrohr 25, dagegen mit der Zentriereinheit 30 über ein lösbares Befestigungsmittel verbunden, damit diese Zentriereinheit problemlos weggenommen werden kann, beispielsweise, um eine andere grössere - einem andern Durchmesser des Rohres 11 - zu verwenden, oder bei einem Wechsel des Fräskopfes 20.

In diesem Verbindungselement 34 ist überdies eine Durchgangsöffnung 35 vorgesehen, durch welche angedeutete Leitungen 36, Kabel oder dergleichen von der Zentriereinheit 30 durch die Vorrichtung 10 und durch das neue Rohr nach hinten geführt sind. Damit entsteht ein weiterer wesentlicher Vorteil dieser erfindungsgemässen Ausführung, denn mit der Möglichkeit der durch die Vorrichtung 10 verlegbaren Leitungen müssen diese nicht mehr - wiebei der eingangs gewürdigten bekannten Vorrichtungvorne durch das bestehende Rohr geführt werden, sondern sie sind, wie die übrigen Leitungen für den Fräskopf-Antrieb etc., hinten durchs neue Rohr 12 bis zu der ausserhalb diesem stationierten Versorgungseinheit geführt. Um dies zu ermöglichen, ist die Förderschnecke 60 mit ihrer Längsachse zu derjenigen des Maschinenrohrs 25 bzw. des neuen Rohres 12 gegen die Achse des abzuarbeitenden Rohres 11 hin versetzt, womit für die Leitungen 36 ausreichend Platz geschaffen ist. Die Förderschnecke 60 könnte selbstverständlich auch konzentrisch zum Maschinenrohr 25 angeordnet sein.

An der Frontseite der Zentriereinheit 30 ist zweckmässigerweise eine nicht dargestellte TV-Kamera und ein Signalempfänger für einen Lasermessstrahl installiert, mittels denen die Führung der Vorrichtung 10 im alten Rohr 11 überwacht und gesteuert werden kann. Dessen Leitungen können ebenfalls durch die besagte Durchgangsöffnung 35 zu einem Kontrollraum geführt werden.

Die Zentriereinheit 30 ihrerseits hat als zentrales Element einen Zentrierkörper 32, der hohlzylindrisch ausgebildet ist und mit seinem Aussenmantel in dem abzubauenden Rohr 11 geführt ist. Der Zentrierkörper 32 ist über einen Gelenkhebel 27 an einem mit dem Verbindungselement 34 koppelbaren Basisstück 22 angelenkt. Zwischen den Zentrierkörper 32 und das Basisstück 22 ist ein deformierbarer Puffer 28 geklemmt, welcher erlaubt, dass der Zentrierkörper 32 über das als Kolben/Zylinder-Einheit ausgebildete Verschiebeorgan 33 gegenüber dem Fräskopf 20 radial verstellbar ist, jedoch in einer bestimmten Position, wie bspw. in der gezeigten, radial annähernd fixiert ist. Der in der Ausgangsstellung annähernd parallel zur Längsachse der Vorrichtung 10 verlaufende Gelenkhebel 27 ist am einen Ende 27' im vorderen Bereich des Zentrierkörpers 32 und am anderen Ende 27" im Basisstück 22 um je eine Achse 29 gelenkig gelagert. Der im Zentrierkörper 32 senkrecht zu dessen Längserstreckung befestigte Kolben 33' ist in dem letzteren umschliessenden Zylinder 33" verschiebbar gehalten. Dieser Zylinder 33" seinerseits ist beidseitig über einen Nocken 37 in einer Längsnut 38 des Gelenkhebels 27 positioniert. Bei einer radialen Verstellung der Zentriereinheit 30 bewegt der Kolben 33' den Zentrierkörper 32 entweder gegen die Drehachse des Fräskopfes 20 hin oder aber von dieser weg. Infolgedessen wird der Gelenkhebel 27 um die Achse 29 beim Basisstück 22 in der einen oder andern Richtung geschwenkt. Dadurch kann die Exzentrizität dieser Zentriereinheit 30 zum Fräskopf 20 respektive zum neuen Rohr 12 eingestellt werden und es wird dadurch die erwähnte Sohlengleichheit herbeigeführt.

Bei einer Vorrichtung für grössere Durchmesser kann auch auf den flexiblen Puffer 28 verzichtet werden und anstelle von diesem eine entsprechende radiale Führung vorgesehen sein, welche ebenfalls ein radiales Verschieben der Zentriereinheit 30 gegenüber dem Fräskopf 20 erlaubt.

Der Fräskopf 20 umfasst im wesentlichen einen mit einem Lager 40 verbundenen und von einem nicht näher gezeigten Antrieb drehbaren Ring 42, einen an letzterem lösbar befestigten Stirnfräser 44 und einen diesen umgebenden rohrförmigen Fräskörper 45. Der Stirnfräser 44 hat eine Durchgangsöffnung, durch welche sich das Verbindungselement 34 berührungslos erstreckt und somit als weiterer erfindungsgemässer Vorteil bewirkt ist, dass sich mögliche radial auf die Zentriereinheit 30 wirkenden Kräfte nicht auf den Stirnfräser 44 oder umgekehrt übertragen und nebstdem der Zentriereinheit 30 eine beschränkte Nachgiebigkeit in radialer Richtung zugeteilt ist. Das als Bestandteil des Maschinenrohrs 25 vorgesehene Lager 40 ist auf an sich bekannte Art konstruiert und daher nicht mehr in jedem Detail erläutert. Der rohrförmige Fräskörper 45, der in der Art eines Kernbohrers ausgebildet ist, wird insbesondere dann an der Frontseite des Stirnfräsers 44 befestigt, wenn das das Rohr umschliessende Bodenmaterial 15 nicht hart ist, zum Beispiel sand- oder kiesförmig. Dieser Fräskörper 45 hat während des Abfräsens die Funktion eines Frässchildes und es wird mit diesem. verhindert, dass eben solches weiches Bodenmaterial 15 nicht in grossen Mengen durch die Öffnungen 44' im Stirnfräser 44 und anschliessend durch die Förderschnecke 60 abgeführt wird, denn dies könnte dazu führen, dass allen voran die über dem Rohr befindliche Erde einbrechen könnte.

Dem Maschinenrohr 25 ist ferner auf der dem Fräskopf 20 gegenüberliegenden Stirnseite ein koaxial zu diesem angeordneter Rohrteil 46 und eine darin befestigte hydraulische Steuereinrichtung 50 zugeordnet, mittels der das Maschinenrohr 25 und mit ihm der Fräskopf 20 gegebenenfalls zur Längsachse der neu eingeführten Rohre 12 um einen gewissen Winkel verstellt werden können. Zu diesem Zwecke weist diese Steuereinrichtung 50 zwei zur genannten Längsachse parallel angeordnete, um 180° zueinander versetzte Kolben/Zylinder-Einheiten 52 auf, die individuell verstellbar sind und eine Winkeleinstellung des Maschinenrohrs 25 zu den neuen Rohren 12 in einer beliebigen Richtung ermöglichen. Mit der oberen Kolben/Zylinder-Einheit 52 kann das mit dieser gelenkig verbundene Maschinenrohr 25 gegenüber dem Rohrteil 46 um eine vertikale und mit der unteren um eine horizontale Ebene geschwenkt werden. Eine solche Steuereinrichtung 50 ist an sich im sogenannten Mikrotunneling bereits bekannt und diese ist beim Einsatz der Vorrichtung nicht zwingend notwendig. Mit ihr können jedoch leichte Abweichungen vom geraden Verlauf des alten Rohres ausgeglichen werden.

Am Rohrteil 46 ist im übrigen koaxial zu diesem eine ringförmige Nabe 49 befestigt, welche ihrerseits am vorderen Ende des Rohres 12 zentriert ist.

Die Arbeitsweise der Vorrichtung 10 geschieht dermassen, dass diese vorerst von aussen in einen nicht näher dargestellten Schacht abgesenkt und nachfolgend dessen Zentriereinheit achsgleich in das zu entfernende Rohr 11 eingeführt wird, welches sich beispielsweise in einer Tiefe zwischen einem und mehreren Metern unter dem Boden in horizontaler oder in geneigter Richtung erstreckt. Sodann beginnt der in seinem Durchmesser gegenüber dem Rohr 11 grössere Fräskopf 20 mit dem stirnseitigen Abfräsen dieses Rohres 11 wie auch des letzteres umgebenden Bodenmaterials, wenn, wie dargestellt, das alte mit einem neuen grösseren Rohr ersetzt wird. Dieser Fräskopf 20 wird mit dem ihn lagernden Maschinenrohr 25 über einen ebenfalls nicht gezeigten Hydraulikkolben oder dergleichen, welcher sich in dem besagten Schacht befindet, vorwärtsgeschoben. Unmittelbar hinter dem Maschinenrohr 25 wird ein neues Rohr in das aufgebohrte Loch eingeschoben, welches einen Aussendurchmesser aufweist, der annähernd demjenigen des Fräskopfes 20 entspricht. Die Vorrichtung 10 befindet sich daher zwischen dem alten und dem hinter ihr nachgeführten neuen Rohr, über welches die Vorschubkraft von dem Hydraulikkolben erfolgt. Nach einer gewissen Distanz ist wiederum ein von aussen begehbarer Schacht ausgehoben, bis dahin die Vorrichtung das alte Rohr ersetzt. Diese Art von Kanalrohrsanierung hat grundsätzlich den grossen Vorteil, dass nicht, wie herkömmlich, ein Graben über die gesamte Länge des zu ersetzenden Rohres ausgehoben werden muss, sondern die über dem Rohr befindliche Umgebung kann völlig intakt und unberührt belassen werden.

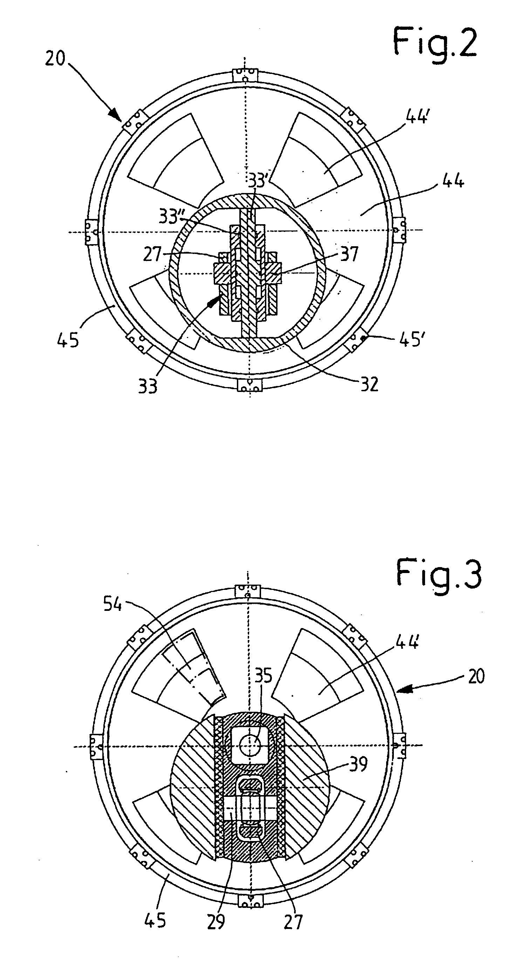

Fig.2 zeigt einen Querschnitt durch den Zentrierkörper 32 und das diesen senkrecht zur Längsachse der Rohres verstellbare Verschiebeorgan 33. Der Kolben 33' von letzterem ist senkrecht in dem Zentrierkörper 32, indessen der Zylinder 33" über die beidseitig an diesem angebrachten Nocken 37 in den Längsnuten 38 des den Zylinder 33" umgreifenden Gelenkhebels 27 gehalten. Bei Betätigung des Verschiebeorgans 33 wird der Kolben 33' und mit ihm der Zentrierkörper 32 gegenüber dem Fräskopf 20 wahlweise nach oben oder nach unten um einen einstellbaren Verstellweg verschoben.

Ferner ist in Fig.2 vom Fräskopf 20 der äussere rohrförmige Stirnfräser 45 veranschaulicht, welcher sich aus einem Frässchild und an der vorderen Stirnseite von letzterer bestückter Abbauwerkzeuge 45', bspw. Hartmetalleinsätze, zusammensetzt, wobei letztere eine Ringfläche beschreiben, die grösser als diejenige des Frässchildes ist und mit diesen dadurch ein Überschnitt erzeugt wird, damit der Frässchild beim Vorwärtsbewegen nicht seitlich klemmt und infolgedessen stets steuerbar ist. Vom Stirnfräser 44 sind die Schneidzähne nicht näher dargestellt, jedoch die vier Öffnungen 44', durch welche das abgefräste Rohr- und Bodenmaterial weggeführt wird.

Aus der Fig.3 ist der deformierbare Puffer 28, der in diesem am einen Ende um die Achse 29 gelenkig gehaltene Gelenkhebel 27 und zwei den Puffer 28 beidseitig schützende Segmente 39 ersichtlich. Zudem ist die den Puffer 28 durchquerende Durchgangsöffnung 35 verdeutlicht, durch welche die Versorgungsleitungen, unter anderem der Hydraulikschlauch für das Verschiebeorgan 33, TV-Leitungen oder ähnliches geführt sind. Ferner ist eine in der einen Öffnung 44' des Stirnfräsers 44 verschiebbar gehaltene Scheibe 54 strichpunktiert angedeutet, welche so ausgestaltet ist, dass diese in der Öffnung hin- und herverschiebbar geführt ist und bewirkt, dass die Öffnung 44' einen verkleinerten Durchlass hat, oder aber voll geöffnet ist. Wenn alle vier Öffnungen mit je einer solchen Scheibe 54 ausgesrüstet sind, kann somit erreicht werden, dass die abzuführende Menge des abgefrästen Materials steuerbar ist. Diese Scheiben 54 können beispielsweise so angeordnet sein, dass sie in der einen Drehrichtung des Fräskopfes 20 voll geöffnet, dagegen in der anderen Drehrichtung den erwähnten verkleinerten Durchlass haben und damit eine zweistufige Steuerung vorgesehen ist.

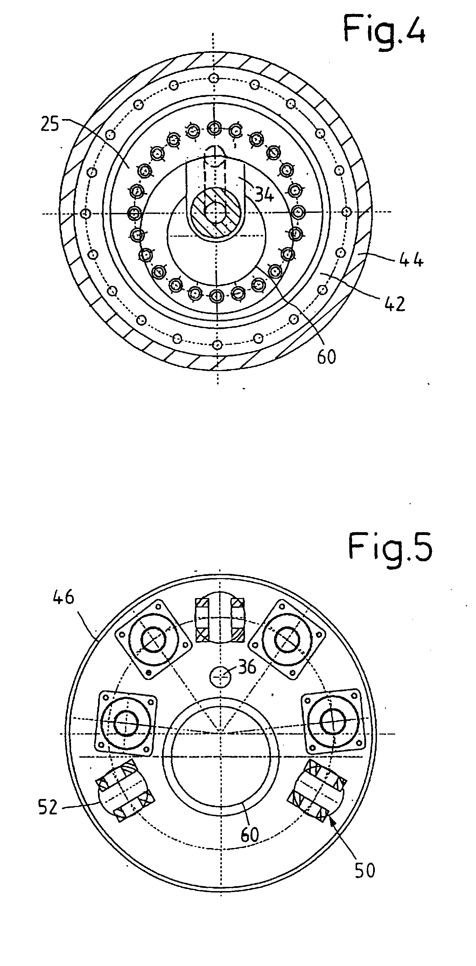

In dem in Fig.4 gezeigten Querschnitt durch die Vorrichtung 10 sind die Verschraubungen des Stirnfräsers 44 mit dem Ring 42 aussen und des Verbindungselementes 34 mit dem Maschinenrohr 25 innen, das Verbindungselement 34 sowie das exzentrisch angeordnete äussere Rohr der Förderschnecke 60 dargestellt. Das Verbindungselement 34 ist exzentrisch mit der Zentriereinheit 30 genauso mit.dem Maschinenrohr 25 verbunden.

Fig.5 zeigt insbesondere die Anordnung der oben ausführlich erläuterten Steuereinrichtung 50, bei welcher drei Kolben/Zylinder-Einheiten 52 im äusseren Umfangsbereich des Rohrteils 46 um je 120° versetzt angeordnet sind. Dies ermöglicht eine Winkeleinstellung des Maschinenrohrs 25 zum Rohrteil 46 und damit zum neuen Rohr 12 quasi in dreidimensionaler Richtung, währenddem bei der Vorhersehung von bloss zwei Kolben/Zylinder-Einheiten eine Winkeleinstellung in einer Ebene erfolgt.

Mit dem Ausführungsbeispiel ist die Erfindung genügend dargetan. Selbstverständlich liesse sie sich noch in anderen Konstruktionen verwirklichen. So könnte beispielsweise zwischen dem Stirnfräser 44 und dem Verbindungselement 34 anstelle der Berührungsfreiheit eine Lagerung vorgesehen sein.

## Patentansprüche

1. Vorrichtung zum Ersetzen von Rohren, insbesondere von Kanalisationsrohren, mit einem vorantreibbaren, in einem Maschinenrohr (25) drehbar gelagerten Fräskopf (20), welcher ein bestehendes Rohr (11) stirnseitig abfräst und diesem dabei eine im abzubauenden Rohr (11) geführte Zentriereinheit (30) zugeordnet ist, dadurch gekennzeichnet, dass sich die Zentriereinheit (30) über ein Verbindungselement (34) durch den Fräskopf (20) hindurch erstreckt und mit dem den Fräskopf (20) drehbar lagernden Maschinenrohr (25) verbunden ist, wobei in diesem Verbindungselement (34) eine Durchgangsöffnung (35) vorgesehen ist, durch welche Leitungen (36), Kabel oder dergleichen von der Zentriereinheit (30) durch die Vorrichtung (10) und durch das neue Rohr (12) nach hinten geführt sind.

2. Vorrichtung nach Anspruch 1, dadurch gekennzeichnet, dass die Zentriereinheit (30) über das Verbindungselement (34) mit dem Maschinenrohr (25) verbunden ist, wobei sich dieses Verbindungselement (34) koaxial durch den Fräskopf (20) erstreckt, an der Zentriereinheit (30) exzentrisch zu deren Längsachse und gegenüberliegend im Innern des Maschinenrohrs (25) ebenfalls exzentrisch zur Längsachse von letzterem befestigt ist.

3. Vorrichtung nach Anspruch 2, dadurch gekennzeichnet, dass die Leitungen (36), Kabel oder dergleichen von der Zentriereinheit (30) durch das neue Rohr (12) neben einer in letzterem durchgeführter Förderschnecke (60) nach hinten geführt sind.

4. Vorrichtung nach einem der Ansprüche 1 bis 3, dadurch gekennzeichnet, dass die Zentriereinheit (30) einen im abzubauenden Rohr (11) geführten hohlzylindrischen Zentrierkörper (32), ein am Verbindungselement (34) fixiertes Basisstück (22), ein dieses mit dem Zentrierkörper (32) gelenkig verbindenden Gelenkhebel (27) und ein den Zentrierkörper (32) radial verstellbares Verschiebeorgan (33) aufweist.

5. Vorrichtung nach Anspruch 4, dadurch gekennzeichnet, dass zwischen den Zentrierkörper (32) und das Basisstück (22) ein deformierbarer Puffer (28) geklemmt ist, welcher erlaubt, dass der Zentrierkörper (32) über das als Kolben/Zylinder-Einheit ausgebildete Verschiebeorgan (33) radial gegenüber dem Fräskopf (20) verstellbar ist.

6. Vorrichtung nach Anspruch 4 oder 5, dadurch gekennzeichnet, dass der Kolben (33') des Verschiebeorgans (33) senkrecht in dem Zentrierkörper (32), indessen der zugehörige Zylinder (33") über beidseitig an diesem angebrachte Nocken (37) in den Längsnuten (38) des den Zylinder (33") umgreifenden Gelenkhebels (27) gehalten ist.

7. Vorrichtung nach einem der vorhergehenden Ansprüche, dadurch gekennzeichnet, dass der Fräskopf (20) einen das Rohr (11) abfräsenden Stirnfräser (44) sowie einen diesen umgebenden und zu diesem vorstehenden rohrförmigen Fräskörper (45) aufweist, wobei letzterer als Kernbohrer ausgebildet ist und mit diesem verhindert wird, dass insbesondere bei Vorkommen von sand- oder kiesförmigem Bodenmaterial (15), welches das abzubauende Rohr (11) umgibt, nicht übermässig durch die das abgebaute Material nach hinten wegbringende Förderschnecke (60) abgeführt wird.

8. Vorrichtung nach einem der vorhergehenden Ansprüche, dadurch gekennzeichnet, dass das mit einem annähernd gleichen Aussendurchmesser wie derjenige des Fräskopfes (20) versehenen Maschinenrohr (25) über eine hydraulische Steuereinrichtung (50) zu einem hinter dieser koaxial angeordneten, im abgefrästen Loch geführten Rohrteil (46) mit seiner Längsachse gegenüber derjenigen von letzterem um einen Winkel verstellbar ist.

9. Vorrichtung nach einem der vorhergehenden Ansprüche, dadurch gekennzeichnet, dass die sich durch den Fräskopf (22) erstreckende Zentriereinheit (30) berührungsfrei zum Fräskopf (22) und damit unabhängig zu diesem angeordnet ist.

## Claims

1. Device for the replacement of pipes, in particular sewer pipes, with a cutter head (20) able to be advanced, mounted to rotate in a machine tube (25), which head cuts off an existing pipe (11) on the end face and associated with the latter in this case is a centering unit (30) guided in the pipe (11) to be cut, characterised in that the centering unit (30) extends by way of a connecting member (34) through the cutter head (20) and is connected to the machine tube (25) mounting the cutter head (20) in a rotary manner, whereby a through-hole (35) is provided in this connecting member (34), through which hole conduits (36), cables or the like are guided rearwards from the centering unit (30) through the device (10) and through the new pipe (12).

2. Device according to Claim 1, characterised in that the centering unit (30) is connected unit (30) is connected by way of the connecting member (34) to the machine tube (25), this connecting member (34) extending coaxially through the cutter head (20) and being attached to the centering unit (30) eccentrically with respect to its longitudinal axis and lying opposite inside the machine tube (25) likewise eccentrically with respect to the longitudinal axis of the latter.

3. Device according to Claim 2, characterised in that the conduits (36), cables ot the like are guided rearwards from the centering unit (30) through the new pipe (12) beside a worm conveyor (60) guided in the latter.

4. Device according to one of Claims 1 to 3, characterised in that the centering unit (30) comprises a hollow cylindrical centering body (32) guided in the pipe (11) to be cut, a base member (22) fixed to the connecting member (34), a toggle joint (37) pivotally connecting the base member to the centering member (32) and a displacement member (33) radially adjusting the centering body (32).

5. Device according to Claim 4, characterised in that clamped between the centering body (32) and the base member (22) is a deformable buffer (28), which makes it possible for the centering body (32) to be radially adjustable with respect to the cutter head (20) by way of the displacement member (33) formed as a piston/cylinder unit.

6. Device according to Claim 4 or 5, characterised in that the piston (33') of the displacement member (33) is held perpendicularly in the centering body (32), while the associated cylinder (33") is held by way of dogs (37) located on the latter on both sides, in the longitudinal grooves (38) of the toggle joint (27) surrounding the cylinder (33").

7. Device according to one of the preceding Claims, characterised in that the cutter head (20) comprises an end cutter (44) cutting-off the pipe (11) as well as a tubular cutting body (45) surrounding the latter and projecting with respect to the latter, the cutter body (45) being constructed as a core bit and with the latter it is prevented that particularly with the presence of earth (15) in the form of sand or gravel, which surrounds the pipe (11) to be cut, it is not discharged excessively by the worm conveyor (60) moving the cut-off material rearwards.

8. Device according to one of the preceding Claims, characterised in that the machine tube (25) provided with an approximately identical outer diameter to that of the cutter head (20) can be adjusted by way of a hydraulic control device (50) to a tube part (46) located coaxially behind the latter and guided in the cut-off hole, by an angle with its longitudinal axis with respect to that of the latter.

9. Device according to one of the preceding Claims, characterised in that the centering unit (30) extending through the cutter head (22) is arranged free from contact with respect to the cutter head (22) and thus independently of the latter.

## Revendications

1. Dispositif pour remplacer des tuyaux, notamment des tuyaux d'égout, comportant une tête à fraiser (20) que l'on peut faire avancer, qui est montée tournante dans un tuyau (25) actionné mécaniquement et qui fraise du côté frontal un tuyau (11) existant une unité (30) de centrage guidée dans le tuyau (11) à démonter étant associée au tuyau (11) existant, caractérisé en ce que l'unité (30) de centrage passe dans la tête à fraiser (20) par l'intermédiaire d'un élément (34) de liaison et est reliée au tuyau (25) qui est actionné mécaniquement et dans lequel la fraise (20) est montée tournante, une ouverture (35) de passage par laquelle des lignes (36), des câbles ou analogue sont guidés de l'unité (30) de centrage vers l'arrière, en passant par le dispositif (10) et par le nouveau tuyau (12), étant prévue dans cet élément (34) de liaison.

2. Dispositif suivant la revendication 1, caractérisé en ce que l'unité (30) de centrage est reliée au tuyau (25) actionné mécaniquement par l'intermédiaire de l'élément (34) de liaison, cet élément (34) de liaison s'étendant coaxialement dans la tête à fraiser (20), étant fixé à l'unité (30) de centrage de manière excentrée par rapport à son axe longitudinal et étant fixé, en face, à l'intérieur du tuyau (25) actionné mécaniquement, également de manière excentrée par rapport à l'axe longitudinal du tuyau (25).

3. Dispositif suivant la revendication 1, caractérisé en ce que les lignes, (36), câbles ou analogue sont guidés de l'unité (30) de centrage vers l'arrière, en passant par le nouveau tuyau (12), à côté d'une vis (60) convoyeuse passant dans le nouveau tuyau (12).

4. Dispositif suivant l'une des revendications 1 à 3, caractérisé en ce que l'unité (30) de centrage comporte un élément (32) de centrage cylindrique, creux, guidé dans le tuyau (11) à démonter, une pièce (22) de base fixée à l'élément (34) de liaison, un levier (27) d'articulation articulant cette pièce (22) de base à l'élément (32) de centrage et à un organe (33) de déplacement déplaçant radialement l'élément (32) de centrage.

5. Dispositif suivant la revendication 4, caractérisé en ce qu'il est coincé entre l'élément (32) de centrage et la pièce (22) de base un tampon (28) déformable qui permet que l'élément (32) de centrage soit déplacé radialement par rapport à la tête à fraiser (20) par l'intermédiaire de l'organe (33) de déplacement réalisé en unité piston cylindre.

6. Dispositif suivant la revendication 4 ou 5, caractérisé en ce que le piston (33') de l'organe (33) de déplacement est maintenu verticalement dans l'élément (32) de centrage, tandis que le cylindre (33") associé est maintenu, par l'intermédiaire de cames (37) qui sont ménagées de part et d'autre, dans les rainures (38) longitudinales du levier (27) d'articulation entourant le cylindre (33").

7. Dispositif suivant l'une des revendications précédentes, caractérisé en ce que la tête à fraiser (20) comporte une fraise (44) frontale fraisant le tuyau (11), ainsi qu'un élément (45) de fraise tubulaire entourant la fraise (44) frontale et faisant saillie par rapport à cette fraise frontale, l'élément (45) de fraise étant réalisé en carotteur et empêchant que, notamment en cas de présence de matériau (15) du sol en forme de sable ou de gravier qui entoure le tuyau (11) à démonter, il n'en soit pas évacué en excès par la vis (60) convoyeuse éloignant vers l'arrière le matériau enlevé.

8. Dispositif suivant l'une des revendications précédentes, caractérisé en ce que l'axe longitudinal du tuyau (25) mécanique muni d'un diamètre extérieur à peu près égal à celui de la tête à fraiser (20) peut, par l'intermédiaire d'un dispositif (50) de commande hydraulique, être déplacé d'un angle par rapport à l'axe longitudinal d'un tronçon (46) de tuyau, monté coaxialement derrière le dispositif (50) de commande et guidé dans le trou fraisé.

9. Dispositif suivant l'une des revendications précédentes, caractérisé en ce que l'unité (30) de centrage s'étendant dans la tête à fraiser (20) est montée sans contact avec la tête à fraiser (20) et donc indépendamment de celle-ci.
